# EUROPEAN PATENT APPLICATION

(11) **EP 4 796 569 A1**
(43) Date of publication of application: **26.08.2026**
(21) Application number: 24879872.0
(22) Date of filing: 14.05.2024
(51) Int. Cl.: C08F 236/06, C08F 2/38, C08F 4/34, C08F 230/08, C08F 2/44

(54) **MULTIFUNCTIONAL LIQUID RUBBER COMPOUND AND METHOD FOR PREPARING SAME**

(30) Priority: 17.10.2023 KR 20230138137; 21.02.2024 KR 20240024718
(71) Applicant: Pusan National University Industry-University Cooperation Foundation, Busan 46241 (KR)
(72) Inventor: PAIK, Hyun Jong, Busan 46241 (KR); KIM, Won Ho, Busan 46241 (KR); CHOI, Ha Eun, Busan 46241 (KR); SONG, Sang Hoon, Busan 46241 (KR); KIM, Seong Yoon, Busan 46241 (KR); JUNG, Jun Hwan, Busan 46241 (KR)
(74) Representative: Gulde & Partner
(86) International application number: PCT/KR2024/006560
(87) International publication number: WO 2025/084529

(57) **Abstract**

The present invention relates to a multifunctional liquid rubber compound and a method for preparing same. More specifically, the present invention relates to: a multifunctional liquid rubber compound that is synthesized using a silane coupling agent and 3-(triethoxysilyl)propyl methacrylate and 1,3-butadiene as comonomers and has an increased number of functional groups; and a method for preparing same. The present invention relates to: a multifunctional liquid rubber compound having an increased number of functional groups capable of forming covalent bonds with the surface of silica; and a method for preparing same.

## Description

### TECHNICAL FIELD

The present invention relates to a multifunctional liquid rubber compound and a method of preparing the same, and more specifically, to a multifunctional liquid rubber compound having an increased number of functional groups, which is synthesized using a silane coupling agent and 3-(triethoxysilyl)propyl methacrylate and 1,3-butadiene as comonomers, and a method of preparing the same.

### BACKGROUND ART

Interest in sustainable, eco-friendly mobility is growing to address greenhouse gas regulations and various environmental pollution issues worldwide. The automotive industry is accelerating the transition from internal combustion engines to electric vehicles, and the tire industry is developing tires for electric vehicle with performance suitable for electric vehicles.

Electric vehicles, which require lightweight design and have limited battery capacity, require reduced rolling resistance to secure driving range. Furthermore, excellent wear resistance is also essential in order to withstand the high loads of the battery and the high torque generated during initial acceleration.

Among the various components of a tire, the tire tread, which comes into direct contact with the road, is the most critical factor in determining tire performance. To enhance processability, a large amount of processing oils, such as treated distillate aromatic extracted (TDAE) oil, are added to tire tread compounds as processing aids.

While the addition of processing oils improves processability, wear resistance and rolling resistance are rather reduced, resulting in a trade-off between processability and physical properties. In addition, the processing oil migrates out of the tire over time, which reduces the flexibility of the tire and causes a decline in its physical properties.

On the other hand, liquid rubber, while serving as a processing aid, may form cross-links with the rubber main chain of the compound during the vulcanization process, resulting in minimal migration after tire manufacturing, allowing for the long-term retention of the original tire properties. Furthermore, the glass transition temperature (T_{g}) of the compound can be controlled depending on the microstructure of the liquid butadiene rubber. Therefore, when liquid butadiene rubber with a low T_{g} is applied, excellent snow braking performance and wear resistance can be achieved. However, the significant hysteresis at the chain ends of the liquid butadiene rubber adversely affects rolling resistance, which impacts fuel economy.

Due to these issues, there is a need for a method that functionalizes the chain ends to chemically immobilize a liquid rubber to a filler, thereby imparting superior fuel economy and wear performance to the tire.

### DETAILED DESCRIPTION OF THE INVENTION

### TECHNICAL PROBLEM

The purpose of the present invention is to provide a novel multifunctional liquid rubber compound capable of chemically immobilizing chains to a filler to impart excellent fuel efficiency, wear resistance, and other characteristics to tires, and a method of preparing the same.

The technical problems to be solved by the present invention are not limited to the above-mentioned technical problems, and other technical problems that are not mentioned will be clearly understood by those skilled in the art from the description of the present invention.

### TECHNICAL SOLUTION

To address the above-described technical problems, the present invention provides a multifunctional liquid rubber compound represented by Chemical Formula 1:

<Chemical Formula 1> R'ₓ(RO)₃₋ₓ-Si-(CH₂)ₐ-S_{c}-(M)-S_{d}-(CH₂)_{b}-Si-(OR)₃₋ₓR'ₓ.

In Chemical Formula 1, R and R' may be the same or different and are each selected from hydrogen or (C1-C6) alkyl, x is an integer selected from 0 to 2, a and b are each independently integers selected from 1 to 5, c and d are each independently integers selected from 1 to 9, and M is a polymer chain including one or more monomers.

The M may be one or two or more selected from 3-(triethoxysilyl)propyl methacrylate, methyl methacrylate, butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, ethenyl (triethoxy)silane, 2-ethene-1-ol, 3-buten-1-ol, methacrylic acid, propenoic acid, 2-ethene-1-amine, 3-buten-1-amine, acrylate-based monomers, and acrylonitrile-based monomers.

The M may include: a compound represented by Chemical Formula 2-1; a compound represented by Chemical Formula 2-2 or a compound represented by Chemical Formula 2-3; and 3-(triethoxysilyl)propyl methacrylate.

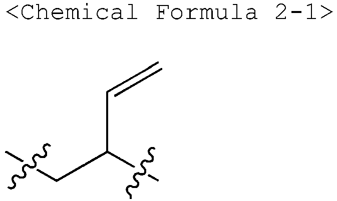

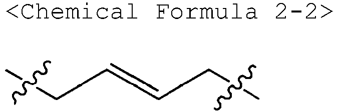

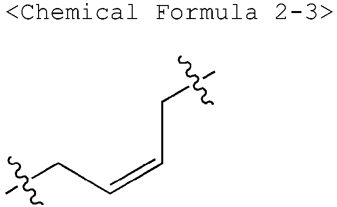

The multifunctional liquid rubber compound may be represented by Chemical Formula 3.

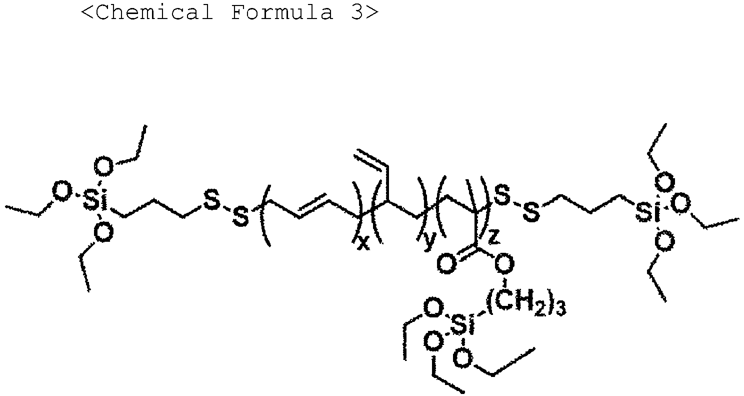

The M may consist of a compound containing: 95% to 99% by mole of the compound represented by Chemical Formula 2-1; and the compound represented by Chemical Formula 2-2 or the compound represented by Chemical Formula 2-3, and 1% to 5% by mole of the 3-(triethoxysilyl)propyl methacrylate based on 100% by mole of the M.

The compound containing: the compound represented by Chemical Formula 2-1; and the compound represented by Chemical Formula 2-2 or the compound represented by Chemical Formula 2-3 may consist of 20% to 25% by mole of the compound represented by Chemical Formula 2-1 and 75% to 80% by mole of the compound represented by Chemical Formula 2-2 or Chemical Formula 2-3.

The M may have a number average molecular weight of 500 to 50,000 g/mol.

The 3-(triethoxysilyl)propyl methacrylate may be represented by Chemical Formula 4.

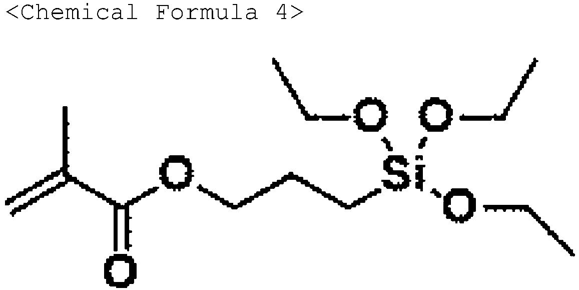

The multifunctional liquid rubber compound may have a vinyl content of 15 to 30 parts by weight based on 100 parts by weight of the total compound.

The multifunctional liquid rubber compound may contain one to five silyl functional groups per compound.

The present invention provides a method of preparing a multifunctional rubber compound, including: a first step of polymerizing an initiator, a monomer, and a comonomer to producing a radical compound; a second step of producing a mono-terminated multifunctional intermediate and a chain transfer agent radical by allowing the prepared radical compound to react with a chain transfer agent represented by Chemical Formula 5; a third step of polymerizing the prepared chain transfer agent radical, the monomer, and the comonomer to form a mono-terminated multifunctional intermediate radical compound; a fourth step of allowing the formed intermediate radical compound and the chain transfer agent represented by Chemical Formula 5 to react to form a di-terminated multifunctional liquid rubber compound.

<Chemical Formula 5> R'ₓ(RO)₃₋ₓ-Si-(CH₂)ₐ-S_{c}-(CH₂)_{b}-Si-(OR)₃₋ₓR'ₓ

In Chemical Formula 5, R and R' may be the same or different and are each selected from hydrogen or (C1-C6) alkyl, x is an integer selected from 0 to 2, a and b are each independently integers selected from 1 to 5, c is an integer selected from 1 to 9.

The comonomer may be a compound including a vinyl functional group including a methacrylate functional group; and a triethoxysilyl functional group.

In the second step and the fourth step, an -Sc- bond provided to the chain transfer agent may be broken by the radical compound to undergo a reaction.

The initiator, the chain transfer agent, and a second monomer including a first monomer and the comonomer may be added in a molar ratio of (1 to 100): (1 to 500): 1000.

The second monomer including the first monomer and the comonomer enables the first monomer and the comonomer polymerize in a molar ratio of (19 to 99): 1.

### ADVANTAGEOUS EFFECTS

By solving the above-described technical solutions, the present invention provides a novel multifunctional liquid rubber compound capable of chemically immobilizing chains to a filler to impart excellent fuel efficiency, wear performance, and other characteristics to tires, and a method of preparing the same.

Furthermore, the present invention provides a liquid butadiene rubber compound with an increased number of functional groups, and a method of preparing the same, by synthesizing 3-(triethoxysilyl)propyl methacrylate and 1,3-butadiene as comonomers, along with a silane coupling agent.

Furthermore, the present invention provides a liquid butadiene rubber compound with an increased number of functional groups capable of forming covalent bonds with a silica surface, and a method of preparing the same.

The effects of the present invention are not limited to those mentioned above, and other effects that are not mentioned will be clearly understood by those skilled in the art from the description of the claims.

### DESCRIPTION OF THE DRAWINGS

FIG. 1 illustrates the process for preparing compounds using 3-(triethoxysilyl)propyl methacrylate according to Examples 1-1 to 1-3 of the present invention.
FIG. 2 illustrates the process for preparing a compound using methyl methacrylate according to Example 1-4 of the present invention.
FIG. 3 illustrates the process for preparing a compound according to Comparative Example 1 of the present invention.
FIG. 4 is a graph illustrating the ¹H-NMR results of Compound A prepared according to Comparative Example 1 of the present invention.
FIG. 5 is a graph illustrating of the ¹H-NMR results of Compound B prepared according to Example 1-1 of the present invention.
FIG. 6 is a graph illustrating of the ¹H-NMR results of Compound C prepared according to Example 1-2 of the present invention.
FIG. 7 is a graph illustrating of the ¹H-NMR results of Compound D prepared according to Example 1-3 of the present invention.
FIG. 8 is a graph illustrating the ¹H-NMR results of Compound E prepared according to Examples 1-4 of the present invention.
FIG. 9 is a graph illustrating the results of size exclusion chromatography (SEC) analysis of Compounds A, B, C, D, and E prepared according to Comparative Example 1 and Examples 1-1 to 1-4 of the present invention.

### BEST MODE

The terms used herein are selected as general terms that are currently widely used as much as possible while considering the functions in the present invention, but they may vary depending on the intention of those of ordinary skill in the art, precedents, the emergence of new technology, or the like. In addition, in certain cases, there are terms arbitrarily selected by the applicant, and in this case, the meaning will be described in the corresponding part of the detailed description of the invention. Therefore, the terms used in the present invention should be defined based on the meaning of the terms and the overall content of the present invention, rather than simply the names of the terms.

Unless otherwise defined, all terms, including technical and scientific terms used herein, have the same meaning as generally understood by one of ordinary skill in the art to which the present invention pertains. Terms, such as those defined in commonly used dictionaries, should be interpreted as having a meaning that is consistent with their meaning in the context of the relevant art and are not interpreted in an idealized or overly formal sense unless explicitly defined in the present invention.

Numerical ranges are inclusive of the values defined therein. Every maximum numerical limitation given throughout the present specification includes every lower numerical limitation, as if such lower numerical limitations were expressly written. Every minimum numerical limitation given throughout the present specification includes every higher numerical limitation, as if such higher numerical limitations were expressly written. Every numerical limitation given throughout the present specification will include every better numerical range within the broader numerical range, as if the narrower numerical limitations were expressly written.

### Multifunctional liquid rubber compound

The present invention relates to a multifunctional liquid rubber compound.

The present invention provides a multifunctional liquid rubber compound represented by Chemical Formula 1:

<Chemical Formula 1> R'ₓ(RO)₃₋ₓ-Si-(CH₂)ₐ-S_{c}-(M)-S_{d}-(CH₂)_{b}-Si-(OR)₃₋ₓR'ₓ.

In Chemical Formula 1, R and R' may be the same or different and are each selected from hydrogen or (C1-C6) alkyl, x is an integer selected from 0 to 2, a and b are each independently integers selected from 1 to 5, c and d are each independently integers selected from 1 to 9, and M is a polymer chain including one or more monomers.

In the present invention, the M may be one or two or more selected from 3-(triethoxysilyl)propyl methacrylate, methyl methacrylate, butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, ethenyl (triethoxy)silane, 2-ethene-1-ol, 3-buten-1-ol, methacrylic acid, propenoic acid, 2-ethene-1-amine, 3-buten-1-amine, acrylate-based monomers, and acrylonitrile-based monomers.

In the present invention, the M may include: a compound represented by Chemical Formula 2-1; a compound represented by Chemical Formula 2-2 or a compound represented by Chemical Formula 2-3; and 3-(triethoxysilyl)propyl methacrylate.

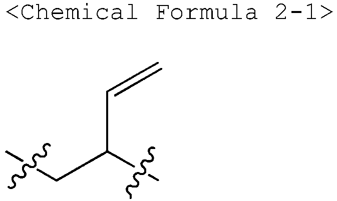

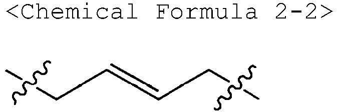

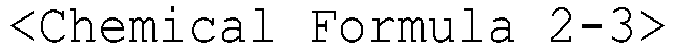

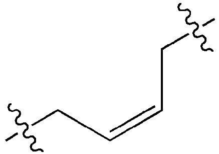

In the present invention, the multifunctional liquid rubber compound may be represented by Chemical Formula 3.

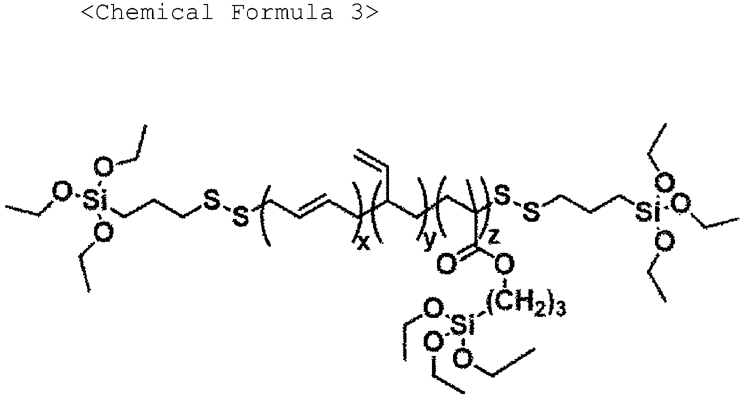

In the present invention, the M may consist of a compound containing: 95% to 99% by mole of the compound represented by Chemical Formula 2-1; and the compound represented by Chemical Formula 2-2 or the compound represented by Chemical Formula 2-3, and 1% to 5% by mole of the 3-(triethoxysilyl)propyl methacrylate based on 100% by mole of the M.

In the present invention, the compound containing: the compound represented by Chemical Formula 2-1; and the compound represented by Chemical Formula 2-2 or the compound represented by Chemical Formula 2-3 may consist of 20% to 25% by mole of the compound represented by Chemical Formula 2-1 and 75% to 80% by mole of the compound represented by Chemical Formula 2-2 or Chemical Formula 2-3.

In the present invention, the M may have a number average molecular weight of 500 to 50,000 g/mol.

In the present invention, the 3-(triethoxysilyl)propyl methacrylate may be represented by Chemical Formula 4.

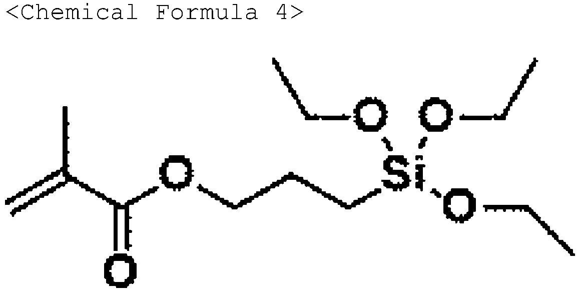

The 3-(triethoxysilyl)propyl methacrylate may be a vinyl monomer having both a polymerizable methacrylate functional group and a triethoxysilyl functional group capable of bonding to a silica surface. The 3-(triethoxysilyl)propyl methacrylate may be easily copolymerized with 1,3-butadiene.

In the present invention, the multifunctional liquid rubber compound may have a vinyl content of 15 to 30 parts by weight, preferably 18 to 25 parts by weight, based on 100 parts by weight of the total compound, but is not limited thereto.

In the present invention, the multifunctional liquid rubber compound may contain one to five silyl functional groups per compound, but is not limited thereto.

### Method of preparing the multifunctional liquid rubber compound

The present invention relates to a method of preparing the multifunctional liquid rubber compound.

The present invention provides a method of preparing a multifunctional rubber compound, including: a first step of polymerizing an initiator, a monomer, and a comonomer to producing a radical compound; a second step of producing a mono-terminated multifunctional intermediate and a chain transfer agent radical by allowing the prepared radical compound to react with a chain transfer agent represented by Chemical Formula 5; a third step of polymerizing the prepared chain transfer agent radical, the monomer, and the comonomer to form a mono-terminated multifunctional intermediate radical compound; a fourth step of allowing the formed intermediate radical compound and the chain transfer agent represented by Chemical Formula 5 to react to form a di-terminated multifunctional liquid rubber compound.

<Chemical Formula 5> R'ₓ(RO)₃₋ₓ-Si-(CH₂)ₐ-S_{c}-(CH₂)_{b}-Si-(OR)₃₋ₓR'ₓ

In Chemical Formula 5, R and R' may be the same or different and are each selected from hydrogen or (C1-C6) alkyl, x is an integer selected from 0 to 2, a and b are each independently integers selected from 1 to 5, c is an integer selected from 1 to 9.

In the present invention, the comonomer may be a compound including a vinyl functional group including a methacrylate functional group; and a triethoxysilyl functional group.

In the present invention, in the second step and the fourth step, an -Sc- bond provided to the chain transfer agent may be broken by the radical compound to undergo a reaction.

In the present invention, the initiator, the chain transfer agent, and a second monomer including a first monomer and the comonomer may be added in a molar ratio of (1 to 100): (1 to 500): 1000, but the present invention is not limited thereto.

In the present invention, the second monomer including the first monomer and the comonomer enables the first monomer and the comonomer polymerize in a molar ratio of (19 to 99): 1, but the present invention is not limited thereto.

### Examples

Hereinafter, examples of the present invention will be described in detail, but it is obvious that the present invention is not limited to the following examples.

The advantages and features of the present invention and methods for achieving them will become apparent with reference to the embodiments described in detail below together with the accompanying drawings. However, the present invention is not limited to the embodiments disclosed below, but may be implemented in various different forms, and the present embodiments are provided only to make the disclosure of the present invention complete and to fully inform those skilled in the art of the scope of the invention, and the present invention is defined only by the scope of the claims.

### <Example 1> Preparation of multifunctional liquid rubber compounds

### 1. Materials

Tetrahydrofuran (THF, 99.9% Samchun Chemical CO., LTD., Seoul, South Korea), bis-[3-(triethoyxysilyl)propyl]tetrasulfide (TESPT, Si-69, Evonik Korea CO., LTD., Korea), and di-*tert*-butyl peroxide (Sigma-Aldrich Corp., Seoul, Korea) were prepared.

### 2. Synthesis

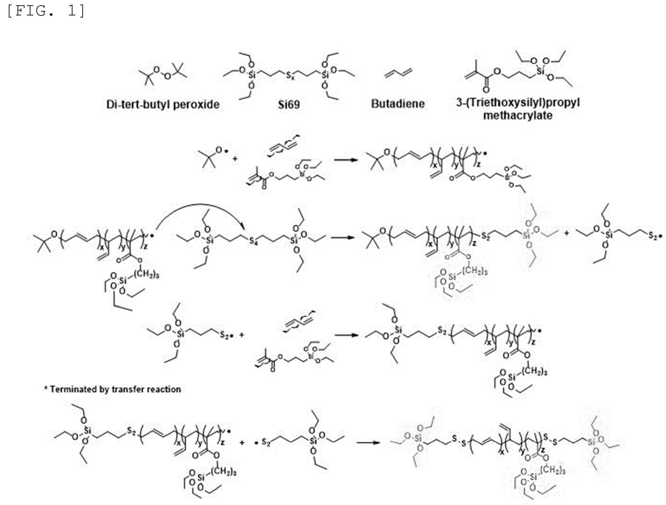

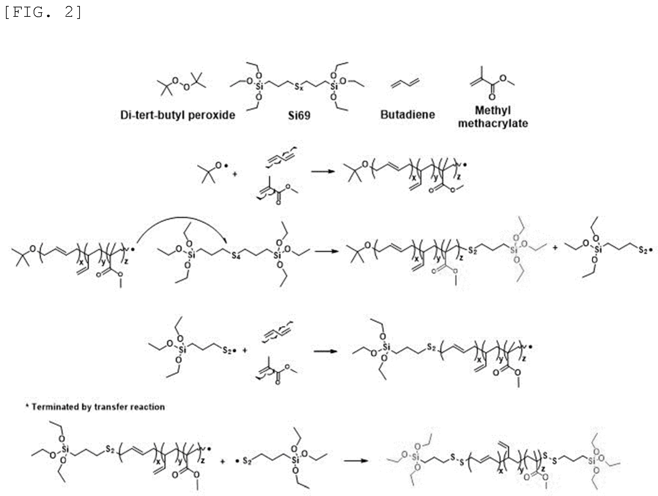

TESPT (Si-69), di-*tert*-butyl peroxide, THF, and 3-(triethoxysilyl)propyl methacrylate or methyl methacrylate (comonomer) were introduced into a high-temperature, high-pressure stirred stainless steel reactor (1 L) at room temperature, and the reactor was then purged with nitrogen. 1,3-butadiene (monomer) was injected through the gas line of the reactor. Subsequently, the temperature was increased to 135 °C, and polymerization was conducted under a specified pressure for a specified period of time. The temperature was then reduced to 15 °C to terminate the reaction. Upon reaching 15 °C, unreacted 1,3-butadiene was removed through a vent line. THF was removed by vacuum distillation. The remaining initiator and chain transfer agent were removed by precipitating the polymer in ethanol and then centrifuging (FIGS. 1 and 2).

### <Comparative Example 1> Preparation of Compound A

### 1. Materials

Cyclohexane (99%, Samchun Chemical CO., LTD., Seoul, South Korea), bis-[3-(triethoxysilyl)propyl]tetrasulfide (TESPT, Si-69) (Evonik Korea CO., LTD., Korea), and di-*tert*-butyl peroxide (Sigma-Aldrich Corp., Seoul, Korea) were prepared.

### 2. Synthesis

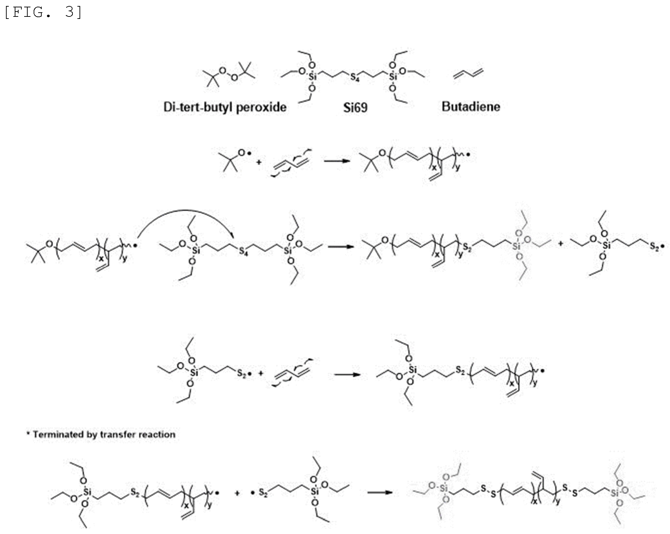

TESPT (Si-69), di-*tert*-butyl peroxide, and cyclohexane were each added to a 1 L high-temperature, high-pressure stirred stainless steel reactor at room temperature, and the reactor was then purged with nitrogen. 1,3-Butadiene (monomer) was injected through a gas line. Subsequently, the temperature was increased to 135 °C, and polymerization was conducted under a specified pressure for the specified period of time. The temperature was then reduced to 15 °C to terminate the reaction. Upon reaching 15 °C, unreacted 1,3-butadiene was removed through a vent line. Cyclohexane was removed by vacuum distillation. The remaining initiator and chain transfer agent were removed by precipitating the polymer in ethanol and then centrifuging (FIG. 3).

Using the above-described method, 18 g of TESPT, 0.97 g of di-*tert*-butyl peroxide, 180 g of cyclohexane, and 180 g of 1,3-butadiene were polymerized at 18 bar for eight hours to prepare compound A.

### <Example 1-1> Preparation of Compound B

Compound B was prepared by polymerizing 18 g of TESPT, 0.97 g of di-*tert*-butyl peroxide, 186 g of tetrahydrofuran, 176 g of 1,3-butadiene, and 10 g of 3-(triethoxysilyl)propyl methacrylate at a pressure of 18 bar for eight hours using the method of Example 1.

### <Example 1-2> Preparation of Compound C

Compound C was prepared by polymerizing 17 g of TESPT, 0.89 g of di-tert-butyl peroxide, 187 g of tetrahydrofuran, 160 g of 1,3-butadiene, and 27 g of 3-(triethoxysilyl)propyl methacrylate at a pressure of 18 bar for eight hours using the method of Example 1.

### <Example 1-3> Preparation of Compound D

Compound D was prepared by polymerizing 15 g of TESPT, 0.83 g of di-*tert*-butyl peroxide, 188 g of tetrahydrofuran, 146 g of 1,3-butadiene, and 41 g of 3-(triethoxysilyl)propyl methacrylate at a pressure of 18 bar for eight hours using the method of Example 1.

### <Example 1-4> Preparation of Compound E

Compound E was prepared by polymerizing 18 g of TESPT, 0.95 g of di-*tert*-butyl peroxide, 177 g of tetrahydrofuran, 174 g of 1,3-butadiene, and 3 g of methyl methacrylate at 18 bar for eight hours using the method of Example 1.

### <Experimental Example 1> Physical property analysis of compounds

### 1. Analytical method

### 1) Molecular weight analysis

Molecular weight calibration was performed using a polybutadiene standard sample (Waters Corp. Germany) using size exclusion chromatography (SEC), which consisted of a solvent delivery unit, a refractive index detector, and three types of styragel columns [HT 6E (10 µm, 7.8 mm × 300 mm), HMW 7 column (15-20 µm, 7.8 mm × 300 mm), and HMW 6E column (15-20 µm, 7.8 mm × 300 mm)].

### 2) Vinyl content determination

The vinyl content in the compounds prepared according to Comparative Example 1 and Example 1 was determined using proton nuclear magnetic resonance (¹H NMR, Varian, Unity Plus 300 spectrometer, Garden State Scientific, Morristown, NJ, USA). The compounds were dissolved in deuterochloroform (CDCl₃, Cambridge Isotope Laboratories, Inc., Andover, MA, USA) at a concentration of 15 mg/mL in a 5 mm NMR tube.

### 2. Analysis results

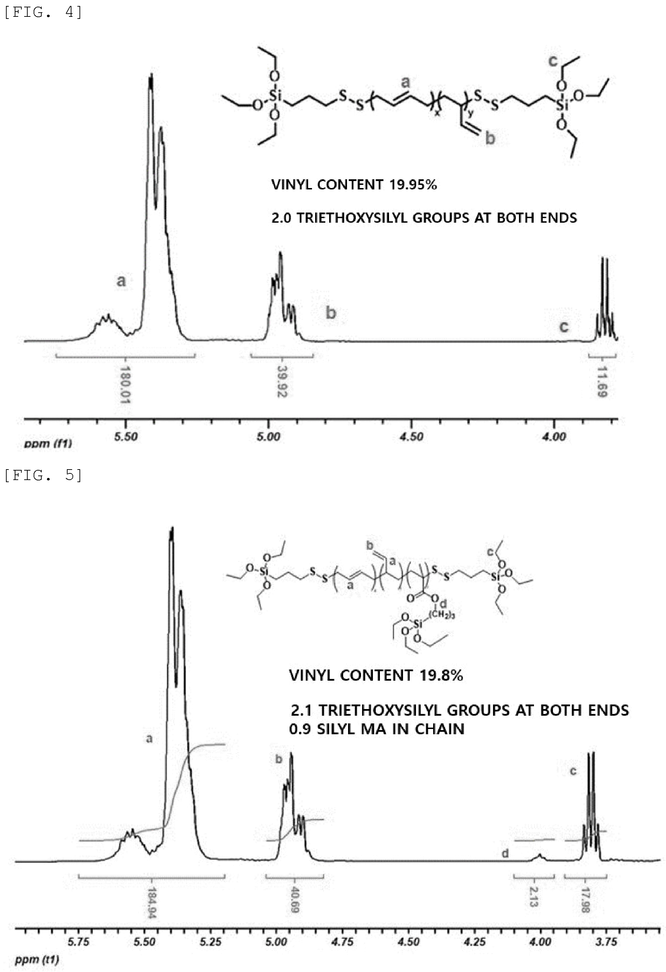

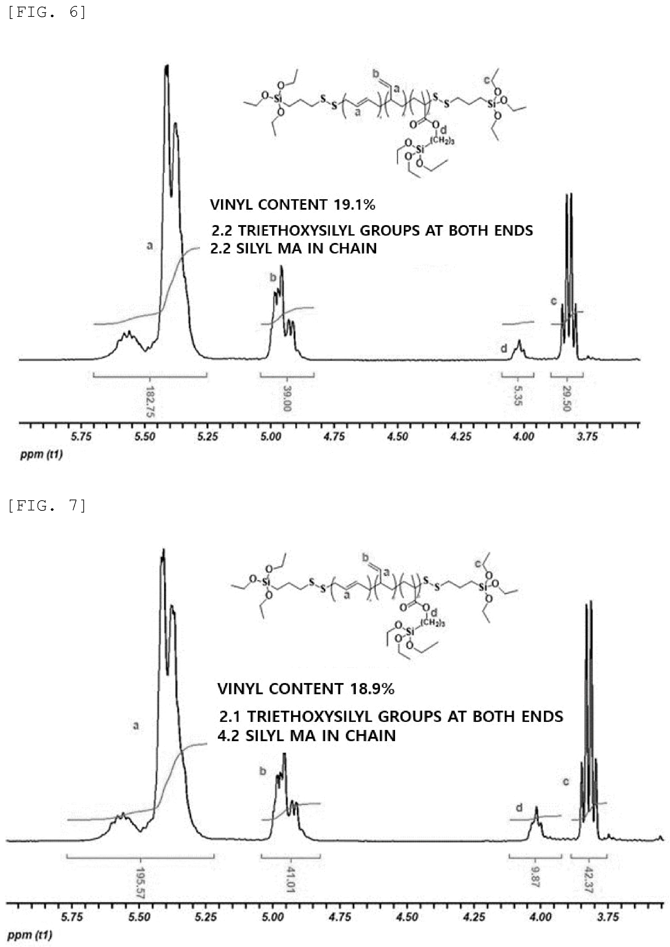

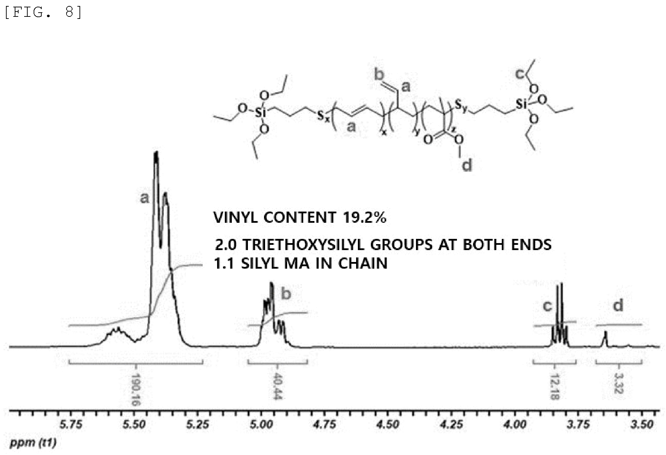

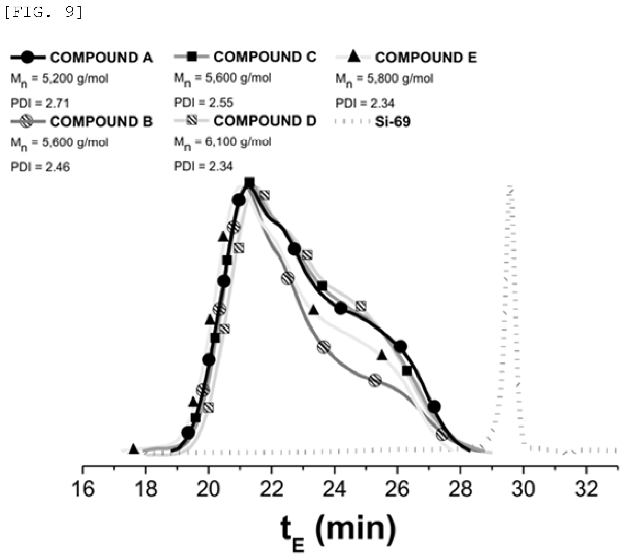

As a result of the molecular weight analysis and vinyl content determination experiments, the physical properties of Compounds A to E prepared according to Comparative Example 1 and Examples 1-1 to 1-4 were shown in [Table 1] and FIGS. 4 to 9.

**[Table 1]**

| Item | Compound A (Comparative Example 1) | Compound B (Example 1-1) | Compound C (Example 1-2) | Compound D (Example 1-3) | Compound E (Example 1-4) |
|---|---|---|---|---|---|
| [I]:[Si-69]: [M] | 2:10:1000 | 2:10:1000 | 2:10:1000 | 2:10:1000 | 2:10:1000 |
| Reaction conditions | 135 °C, 8 h | 135 °C, 8 h | 135 °C, 8 h | 135 °C, 8 h | 135 °C, 8 h |
| [M1]:[M2] | 100:0 | 99:1 | 97:3 | 95:5 | 99:1 |
| Molecular weight (Mn, g/mol) | 5,200 | 5,600 | 5,600 | 6,100 | 5,800 |
| Molecular weight distribution (Mw/Mn) | 2.71 | 2.46 | 2.55 | 2.34 | 2.34 |
| Vinyl content (% by weight) | 19 | 20 | 19 | 19 | 19 |
| Functional groups (Si/Chain) | 2 | 3 | 4.4 | 6.3 | 2 |

* I: Initiator / Si-69: Chain transfer agent (TESPT) / M1: 1,3-butadiene / M2: 3-(triethoxysilyl)propyl methacrylate (Examples 1-1 to 1-3) or methyl methacrylate (Example 1-4)

### <Examples 2-1 to 2-4 and Comparative Example 2> Preparation of rubber compositions to which a multifunctional liquid rubber compound is applied

Rubber compositions for tire treads were prepared as Comparative Example 2 by applying Compound A prepared according to Comparative Example 1 and as Examples 2-1 to 2-4 by applying Compounds B to E prepared according to Examples 1-1 to 1-4, and the compositions of the materials for the preparation of the rubber compositions are shown in [Table 2] below.

### <Comparative Examples 2-1 and 2-2> Preparation of rubber compositions to which a multifunctional liquid rubber compound is not applied

Comparative Examples 2-1 and 2-2 were prepared as rubber compositions for tire treads to which a multifunctional liquid rubber compound is not applied, and the compositions of the materials for the preparation of the rubber compositions are shown in [Table 2] below.

**[Table 2]**

| (Unit: parts by weight) | Comparative Example 2-1 | Comparative Example 2-2 | Rubber (Comparative composition A Example 2) | Rubber composition B (Example 2-1) | Rubber composition C (Example 2-2) | Rubber composition D (Example 2-3) | Rubber composition E (Example 2-4) |
|---|---|---|---|---|---|---|---|
| S-SBR¹⁾ | 80 | 80 | 80 | 80 | 80 | 80 | 80 |
| BR²⁾ | 20 | 20 | 20 | 20 | 20 | 20 | 20 |
| Silica³⁾ | 120 | 120 | 120 | 120 | 120 | 120 | 120 |
| Coupling agent⁴⁾ | 20 | 20 | 20 | 20 | 20 | 20 | 20 |
| Softener 1⁵⁾ | 40 | 30 | 30 | 30 | 30 | 30 | 30 |
| Softener 2⁶⁾ | - | 10 | - | - | - | - | - |
| Compound A | - | - | 10 | - | - | - | - |
| Compound B | - | - | - | 10 | - | - | - |
| Compound C | - | - | - | - | 10 | - | - |
| Compound D | - | - | - | - | - | 10 | - |
| Compound E | - | - | - | - | - | - | 10 |
| Zinc oxide⁷⁾ | 3 | 3 | 3 | 3 | 3 | 3 | 3 |
| Stearic acid⁸⁾ | 1 | 1 | 1 | 1 | 1 | 1 | 1 |
| Antioxidant 1⁹⁾ | 2 | 2 | 2 | 2 | 2 | 2 | 2 |
| Antioxidant 2¹⁰⁾ | 1 | 1 | 1 | 1 | 1 | 1 | 1 |
| General wax | 1 | 1 | 1 | 1 | 1 | 1 | 1 |
| Sulfur¹¹⁾ | 1.3 | 1.3 | 1.3 | 1.3 | 1.3 | 1.3 | 1.3 |
| CBS¹²⁾ | 1.6 | 1.6 | 1.6 | 1.6 | 1.6 | 1.6 | 1.6 |
| DPG¹³⁾ | 2 | 2 | 2 | 2 | 2 | 2 | 2 |
| ZBEC¹⁴⁾ | 0.1 | 0.1 | 0.1 | 0.1 | 0.1 | 0.1 | 0.1 |

Details of the materials included in [Table 2] are as follows.
1) Solution-styrene butadiene rubber (S-SBR) is a solution-polymerized SBR (5220M, Kumho Petrochemical CO., LTD., Korea) manufactured by a continuous process, with a styrene content of 26.5% by weight, a vinyl content of 26% by weight within the butadiene, a Mooney viscosity of 54, and a glass transition temperature of -48 °C.
2) Butadiene rubber (BR) is a solution-polymerized butadiene rubber (CB24, Lanxess Chemical Industry CO., LTD., Cologne, Germany) manufactured by a neodymium catalyst, with a cis-content of 96% by weight within the butadiene, a Mooney viscosity of 44, and a neodymium catalyst.
3) The silica used was micropearl type precipitated silica (ZEOSIL 195MP, Solvay Silica Korea CO., LTD., Gunsan, Korea) with a cetyl trimethyl ammonium bromide (CTAB) surface area of 180 to 220 m²/g.
4) The coupling agent included bis-[3-(triethoxysilyl)propyl]tetrasulfide (TESPT) in an amount of 50% by weight and carbon black N330 in an amount of 50% by weight. The product name is X50S (Evonik Industries AG, Essen, Germany).
5) Softener 1 (process oil) is a treated distillate aromatic extracted (TDAE) oil (Vivatec 500, Kukdong Oil & Chemicals CO., LTD., Yangsan, Korea) with a total polycyclic aromatic hydrocarbon (PAH) content of 3% by weight or less, a kinematic viscosity of 95 (210 °F SUS), and containing aromatic components in an amount of 25% by weight, naphthenic components in an amount of 32.5% by weight, and paraffinic components in an amount of 47.5% by weight.
6) Softener 2 was unmodified liquid butadiene rubber, specifically, liquid polybutadiene rubber (LBR 307, Kuraray, Japan) synthesized with a number-average molecular weight of 4,400 g/mol, a vinyl content of 15% by weight, and a glass transition temperature of -95 °C.
7) Zinc oxide was used as a crosslinking activator (Sigma-Aldrich Corp., Seoul, Korea).
8) Stearic acid was used as a crosslinking activator (Sigma-Aldrich Corp., Seoul, Korea).
9) N-(1,3-dimethylbutyl)-N'-phenyl-p-phenylenediamine (6PPD, Kumho Petrochemical CO., LTD., Daejeon, Korea) was used as an antioxidant.
10) 2,2,4-trimethyl-1,2-dihydroquinoline (TMQ, Sinopec Corp., Beijing, China) was used as an antioxidant.
11) Elemental sulfur powder (Daejung Chemicals & Metals CO., LTD., Siheung, Korea) was used as a crosslinking agent.
12) N-cyclohexyl-2-benzothiazolylsulfenamide (CBS, 98%, Tokyo Chemical Industry CO., LTD., Tokyo, Japan) was used as an accelerator.
14) 1,3-Diphenylguanidine (DPG, 98%, Tokyo Chemical Industry CO., LTD., Tokyo, Japan) was used as an accelerator.
15) Zinc dibenzyl dithiocarbamate (ZBEC; Sigma-Aldrich Corp., Seoul, Korea) was used as a ultra-accelerator.

The rubber compositions were prepared according to the rubber composition preparation method shown in [Table 3] below.

**[Table 3]**

| Step | Time (min : sec) | Method |
|---|---|---|
| Step 1 | 0:00 - 0:40 | Input rubber (Initial Temp: 100 °C) |
| | 0:40 - 1:40 | Add 1/2 Silica + 1/2 X50S + 1/2 DPG + 1/2 Oil + 1/2 Compound |
| | 1:40 - 2:40 | Add 1/2 Silica + 1/2 X50S + 1/2 DPG + 1/2 Oil + 1/2 Compound |
| | 2:40 - 5:00 | Add ZnO, St/A, 6PPD, TMQ, WAX |
| | 5:00 - 5:30 | Ram up |
| | 5:30 - 7:40 | Additional mixing and dump (Dump temp: 150 to 155 °C) |
| Step 2 | 0:00 - 0:2 | Add masterbatch from Step 1 (Initial temp: 50 °C) |
| | 0: 20 - 2:0 | Add curing agents and dump (Dump temp: 80 to 90 °C) |

As shown in [Table 3], the rubber compositions for the tire tread were prepared through a two-stage continuous preparation process. In other words, the compositions may be prepared in a suitable mixer using a first step (non-production step) of performing thermomechanical treatment or kneading at a high temperature of 150 °C to 155 °C and a second step (production step) of performing mechanical treatment at a low temperature of 80 °C to 90 °C during a finishing stage in which a crosslinking system is mixed.

### <Experimental Example 2> Physical property analysis of rubber compositions

### 1-1. Analytical Method

### 1) Mooney viscosity (ML1+4 @ 100 °C)

The Mooney viscosity was measured using a Mooney viscometer (Vluchem IND CO., LTD., Korea) according to ASTM D-1646.

### 2) Mechanical properties

The modulus at 100% elongation (M100%), modulus at 300% elongation (M300%), and elongation were measured using a universal testing machine (UTM, KSU-05M-C, KSU CO., LTD., Korea) according to ASTM D412.

### 3) Wear resistance

Cylindrical specimens with a diameter of 16 mm and a thickness of 8 mm were manufactured according to DIN 53516. The specimens were ground 40 m at a speed of 40 rpm using a Deutsche Industrie Normen (DIN) wear tester, and the mass loss was measured.

### 4) Dynamic viscoelasticity

The temperature sweep was measured using an ARES instrument at a strain of 0.5% and a frequency of 10 Hz from -60 °C to 60 °C. The storage modulus (G'), loss modulus (G"), and tan δ were measured in the torsion mode.

The strain sweep was measured using a dynamic material thermal spectrometer (DMTS, Eplexor 500N, GABO GmbH & Co. KG, Germany) at a temperature of 60 °C and a frequency of 10 Hz, from a dynamic strain of 0.5% to 10% in the tension mode.

### 2-2. Analysis results

[Table 4] below shows the results of analyzing the physical properties of the rubber compositions of Examples 2-1 to 2-4, Comparative Example 2, and Comparative Examples 2-1 and 2-2 according to Experimental Example 2.

**[Table 4]**

| Item | Comparative Example 2-1 | Comparative Example 2-2 | Rubber composition A (Comparative Example 2) | Rubber composition B (Example 2-1) | Rubber composition C (Example 2-2) | Rubber composition D (Example 2-3) | Rubber composition E (Example 2-4) |
|---|---|---|---|---|---|---|---|
| Payne effect (ΔG', MPa) | 7.26 | 7.11 | 5.44 | 4.38 | 2.86 | 3.01 | 5.39 |
| Mooney viscosity (ML₁₊₄ @100 °C) | 155 | 149 | 134 | 128 | 119 | 119 | 131 |
| Extraction weight loss (%) | 100 | 77 | 10 | 8 | 3 | 6 | 10 |
| Total crosslink density (10⁻⁴ mol/g) | 1.48 | 1.37 | 1.63 | 1.71 | 1.79 | 1.79 | 1.58 |
| 100% modulus (kgf/cm²) | 43 | 38 | 43 | 45 | 51 | 47 | 43 |
| 300% modulus (kgf/cm²) | 132 | 122 | 140 | 141 | 149 | 148 | 134 |
| Elongation (%) | 378 | 406 | 383 | 363 | 378 | 360 | 368 |
| DIN abrasion (mg) (Index) | 109 (100) | 99 (109) | 96 (112) | 94 (114) | 86 (121) | 91 (117) | 96 (112) |
| Glass transition temperature (°C) | -39.1 | -42.6 | -40 | -40 | -39.8 | -39.4 | -40 |
| G' at -30 °C, MPa (Index) | 185 (100) | 172 (107) | 175 (105) | 146 (121) | 145 (122) | 158 (115) | 178 (104) |
| tanδ at 60 °C, 0.5% strain (Index) | 0.144 (100) | 0.147 (98) | 0.141 (102) | 0.137 (105) | 0.137 (105) | 0.139 (103) | 0.139 (103) |
| tanδ at 60 °C, 5% strain (Index) | 0.201 (100) | 0.210 (96) | 0.188 (106) | 0.176 (112) | 0.159 (121) | 0.160 (121) | 0.196 (98) |

Referring to [Table 4], the Payne effect represents the filler-filler interaction of a non-vulcanized material. The decrease in storage modulus (G') with increasing strain amplitude is a result of the destruction of the filler network, and a higher ΔG' value indicates a stronger filler-filler interaction. The compound prepared according to Example 1 makes the silica surface hydrophobic, thereby improving silica dispersion. As a result, the rubber compositions B to E of Examples 2-1 to 2-4, to which the compound was applied, exhibited low Payne effect values.

The Mooney viscosity is an indicator of compound processability. The compound prepared according to Example 1 not only improved silica dispersion but also served as a lubricant between the raw rubber materials, promoting chain slippage and reducing the Mooney viscosity of the rubber compositions B to E of Examples 2-1 to 2-4 to which the compound was applied.

The extraction weight loss value is an experimental result that may be used to predict the migration of processing aids from a vulcanized material. A lower value indicates higher extraction resistance.

The compounds prepared according to Examples 1-1 to 1-3 may be immobilized to a rubber network through co-vulcanization with raw rubber during vulcanization, and the multifunctional functional group may be immobilized to the silica surface through a silanization reaction. Therefore, the rubber compositions B, C, and D of Examples 2-1 to 2-3 prepared using the same exhibited a lower extraction amount compared to the rubber composition A of Comparative Example 2 and Comparative Examples 2-1 and 2-2 including the compound prepared according to Comparative Example 1. In other words, the migration is reduced, so that the deterioration of physical properties due to the increase in the tire use period can be prevented. Meanwhile, the compound prepared according to Example 1-4 has a functional group introduced through a comonomer that does not react with the silanol functional group on the silica surface, so that the rubber composition E of Example 2-4 prepared using the same exhibited a similar extraction amount to the rubber composition A of Comparative Example 2.

Total crosslink density is defined as the number of crosslink points in a vulcanized material. A higher crosslink density indicates a decrease in the molecular weight between crosslink points and an increase in the number of crosslink points. In a swelling test, a higher crosslink density means a smaller number of solvent molecules that may penetrate between crosslinked rubber chains, resulting in less swelling.

The compounds prepared according to Examples 1-1 to 1-3 can increase filler-rubber interaction through a coupling reaction with the raw rubber using a multifunctional functional group. Therefore, the rubber compositions B, C, and D prepared according to Examples 2-1 to 2-3 exhibited higher total crosslink densities compared to the rubber composition A of Comparative Example 2, which included the compound prepared according to Comparative Example 1, and the rubber compositions of Comparative Examples 2-1 and 2-2. Meanwhile, the rubber composition E of Example 2-4, to which the compound prepared according to Example 1-4 was applied, exhibited a lower crosslinking density compared to the rubber composition A of Comparative Example 2.

In a tensile test, the modulus value has a high correlation with the crosslinking density of the compound, and generally, as the modulus value increases, the elongation tends to decrease conversely. The compounds prepared according to Examples 1-1 to 1-3 increased the filler-rubber interaction through a coupling reaction by a multifunctional functional group, and the rubber compositions B, C, and D of Examples 2-1 to 2-3 prepared using the same exhibited a high modulus of 300% without a decrease in elongation compared to the rubber composition A of Comparative Example 2 including the compound prepared according to Comparative Example 1 and the compositions of Comparative Examples 2-1 and 2-2. Meanwhile, the rubber composition E of Example 2-4, to which the compound manufactured according to Example 1-4 was applied, exhibited a lower modulus value of 300% compared to the rubber composition A of Comparative Example 2.

Wear resistance is significantly affected by the glass transition temperature (T_{g}) of rubber and the filler-rubber interaction. The compounds prepared according to Examples 1-1 to 1-3 showed increased filler-rubber interaction through a coupling reaction by a multifunctional functional group. Rubber compositions B, C, and D of Examples 2-1 to 2-3, which were prepared by applying these compounds, exhibited improved wear resistance performance.

The viscoelastic properties of a rubber composition are laboratory measurements that may be used to predict tire performance, and there is a very high correlation between the two. The storage modulus (G') value at -30 °C in [Table 4] is an indicator of snow traction on icy roads, with a lower value indicating improved braking performance (snow traction). This is because a lower G' value at low temperatures allows the tire tread to easily deform on an icy road surface, increasing the contact area. The tan δ value at 60 °C is an indicator of the tire's rolling resistance (RR), and a lower value is known to indicate improved fuel efficiency. The main energy dissipation at this temperature is known to be due to the destruction and regeneration of the filler-filler network and the free chain ends of the rubber.

The compound prepared according to Example 1 has a lower glass transition temperature (T_{g}) than the process oil, thereby lowering the glass transition temperature of the rubber composition. As a result, the flexibility and modulus of the rubber at low temperatures can be reduced, thereby significantly improving the braking performance (snow traction) on an icy road surface.

The compounds prepared according to Examples 1-1 to 1-3 have less hysteresis due to the multifunctional functional group immobilized to the silica surface, and therefore the rubber compositions B, C, and D of Examples 2-1 to 2-3 prepared using the compounds can have improved fuel efficiency compared to the rubber composition A of Comparative Example 2-1 to which the process oil was applied, Comparative Example 2-2 to which unmodified liquid butadiene rubber was applied, and Comparative Example 2 to which liquid butadiene rubber with both ends modified was applied.

## Claims

1. A multifunctional liquid rubber compound represented by Chemical Formula 1:
<Chemical Formula 1> R'ₓ(RO)₃₋ₓ-Si-(CH₂)ₐ-S_{c}-(M)-S_{d}-(CH₂)_{b}-Si-(OR)₃₋ₓR'ₓ
wherein in Chemical Formula 1,
R and R' may be the same or different and are each selected from hydrogen or (C1-C6) alkyl,
x is an integer selected from 0 to 2,
a and b are each independently integers selected from 1 to 5,
c and d are each independently integers selected from 1 to 9, and M is a polymer chain including one or more monomers.

2. The multifunctional liquid rubber compound of claim 1, wherein the M is one or two or more selected from 3-(triethoxysilyl)propyl methacrylate, methyl methacrylate, butadiene, styrene, isoprene, 2,3-dimethyl-1,3-butadiene, 1,3-pentadiene, 1,3-hexadiene, 2-phenyl-1,3-butadiene, 3-methyl-1,3-pentadiene, 2-chloro-1,3-butadiene, 3-butyl-1,3-octadiene, octadiene, ethenyl (triethoxy)silane, 2-ethene-1-ol, 3-buten-1-ol, methacrylic acid, propenoic acid, 2-ethene-1-amine, 3-buten-1-amine, acrylate-based monomers, and acrylonitrile-based monomers.

3. The multifunctional liquid rubber compound of claim 1, wherein the M includes:
a compound represented by Chemical Formula 2-1;
a compound represented by Chemical Formula 2-2 or a compound represented by Chemical Formula 2-3; and
3-(triethoxysilyl)propyl methacrylate.

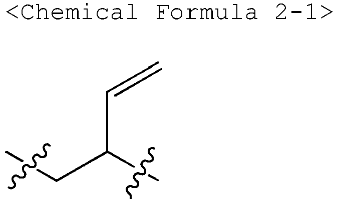

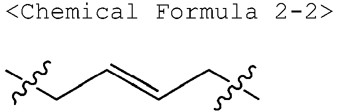

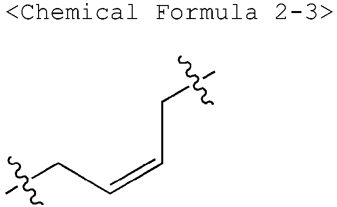

4. The multifunctional liquid rubber compound of claim 1, wherein the multifunctional liquid rubber compound is represented by Chemical Formula 3:

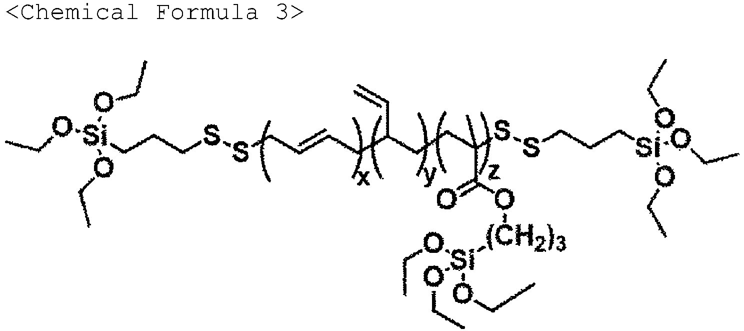

5. The multifunctional liquid rubber compound of claim 3, wherein the M consists of a compound containing: 95% to 99% by mole of the compound represented by Chemical Formula 2-1; and the compound represented by Chemical Formula 2-2 or the compound represented by Chemical Formula 2-3, and 1% to 5% by mole of the 3-(triethoxysilyl)propyl methacrylate based on 100% by mole of the M.

6. The multifunctional liquid rubber compound of claim 5, wherein the compound containing: the compound represented by Chemical Formula 2-1; and the compound represented by Chemical Formula 2-2 or the compound represented by Chemical Formula 2-3 consists of 20% to 25% by mole of the compound represented by Chemical Formula 2-1 and 75% to 80% by mole of the compound represented by Chemical Formula 2-2 or Chemical Formula 2-3.

7. The multifunctional liquid rubber compound of claim 1, wherein the M has a number average molecular weight of 500 to 50,000 g/mol.

8. The multifunctional liquid rubber compound of claim 1, wherein the 3-(triethoxysilyl)propyl methacrylate is represented by Chemical Formula 4:

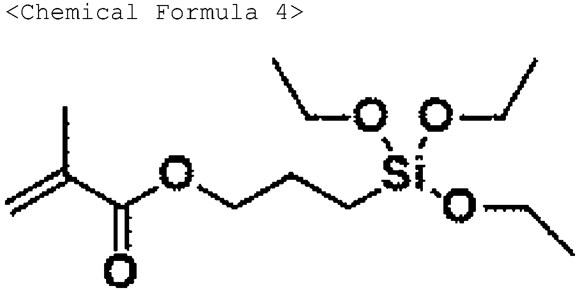

9. The multifunctional liquid rubber compound of claim 1, wherein the multifunctional liquid rubber compound has a vinyl content of 15 to 30 parts by weight based on 100 parts by weight of the total compound.

10. The multifunctional liquid rubber compound of claim 1, wherein the multifunctional liquid rubber compound contains one to five silyl functional groups per compound.

11. A method of preparing a multifunctional rubber compound, comprising:
a first step of polymerizing an initiator, a monomer, and a comonomer to producing a radical compound;
a second step of producing a mono-terminated multifunctional intermediate and a chain transfer agent radical by allowing the prepared radical compound to react with a chain transfer agent represented by Chemical Formula 5;
a third step of polymerizing the prepared chain transfer agent radical, the monomer, and the comonomer to form a mono-terminated multifunctional intermediate radical compound;
a fourth step of allowing the formed intermediate radical compound and the chain transfer agent represented by Chemical Formula 5 to react to form a di-terminated multifunctional liquid rubber compound:
<Chemical Formula 5> R'ₓ(RO)₃₋ₓ-Si-(CH₂)ₐ-S_{c}-(CH₂)_{b}-Si-(OR)₃₋ₓR'ₓ
wherein in Chemical Formula 5,
R and R' may be the same or different and are each selected from hydrogen or (C1-C6) alkyl,
x is an integer selected from 0 to 2,
a and b are each independently integers selected from 1 to 5,
c is an integer selected from 1 to 9.

12. The method of preparing a multifunctional rubber compound of claim 11, wherein the comonomer is a compound including a vinyl functional group including a methacrylate functional group; and a triethoxysilyl functional group.

13. The method of preparing a multifunctional rubber compound of claim 11, wherein in the second step and the fourth step, an - Sc- bond provided to the chain transfer agent is broken by the radical compound to undergo a reaction.

14. The method of preparing a multifunctional rubber compound of claim 11, wherein the initiator, the chain transfer agent, and a second monomer including a first monomer and the comonomer are added in a molar ratio of (1 to 100): (1 to 500): 1000.

15. The method of preparing a multifunctional rubber compound of claim 14, wherein the second monomer including the first monomer and the comonomer enables the first monomer and the comonomer polymerize in a molar ratio of (19 to 99): 1.
